# EUROPEAN PATENT APPLICATION

(11) **EP 4 659 882 A1**
(43) Date of publication of application: **10.12.2025**
(21) Application number: 24179740.6
(22) Date of filing: 04.06.2024
(51) Int. Cl.: B23B 29/04, B23B 27/10, B23B 27/16

(54) **A CASSETTE FOR A CUTTING TOOL AND A CUTTING TOOL**

(71) Applicant: Seco Tools AB, 737 82 Fagersta (SE)
(72) Inventor: Gustavsson, Björn, SE-737 82 Fagersta (SE); Kadin de Laval, Maria, SE-737 82 Fagersta (SE)
(74) Representative: Sandvik

(57) **Abstract**

The invention is related to a cassette (100) configured to be mounted in a tool seat (210) of a cutting tool (800) for chip removing machining, wherein the cassette (100) comprises an insert seat (114) configured to support a cutting insert (300) in the cassette (100). The bottom surface (104) of the cassette (100) comprises first and second cassette holes (116, 120) configured to receive a first and second fastening members (400, 500) for fastening the cassette in the tool seat (210). The bottom surface (104) also comprises alternating parallel ridges (126) and grooves (124) extending in the direction of the longitudinal axis A and configured to mate with alternating parallel grooves (216) and ridges (214) arranged in the tool seat (210). The invention also relates to a cutting tool (800) comprising such a cassette (100).

## Description

### TECHNICAL FIELD

The present invention relates to a cassette for a cutting tool for chip removing machining and to a cutting tool comprising such a cassette. In particular, the invention relates to such a cassette and cutting tool intended for chip removing machining of metallic workpieces.

### BACKGROUND

During chip removing machining, in particular during heavy machining of metallic workpieces, cutting tools with exchangeable cutting inserts are commonly used. The cutting inserts are heavily worn and damages to the cutting inserts are common, such as cutting insert breakage. When the cutting inserts are mounted in insert seats of the cutting tool, the cutting tool, or more precisely the toolholder in which the cutting inserts are mounted, is at risk of being damaged upon chip breakage. Moreover, a large amount of heat is generated during heavy machining, which may also result in damages on the toolholder.

In order to protect the toolholder, a cassette (also commonly referred to as a cartridge) may be used to support the cutting insert. The cassette is in turn mounted in a tool seat of the toolholder. Upon cutting insert breakage, the cassette protects the toolholder from being damaged by the broken cutting insert. The cassette is also able to dissipate some of the heat generated during machining. Thus, the cassette improves the tool life of the toolholder. It further makes it possible to use the same toolholder with different cutting inserts, by using cassettes having similar outer dimensions but inner dimensions which are adapted for receiving different cutting inserts. The use of cassettes may therefore generally improve machining economics.

DE 20 2020 100 483 U1 discloses a cutting tool in the form of a turning tool in which a cassette is used for supporting a cutting insert in a tool body of the cutting tool. The cassette is mounted in the tool body by means of a screw engaged via the bottom surface of the cassette, and a clamp is used to hold the cutting insert in the insert seat.

However, during heavy machining, a high amount of side forces is exerted on the cassette, which tends to displace the cassette in the tool seat, which has a negative impact on the quality of the workpiece machined by the cutting tool.

### SUMMARY OF THE INVENTION

It is an object of the present invention to overcome, or at least partly overcome, said problem by introducing a cassette for a cutting tool for chip removing machining and a cutting tool comprising such a cassette.

The object of the present invention is achieved by means of a cassette configured to be mounted in a tool seat of a cutting tool for chip removing machining, wherein the cassette comprises:
- a top surface;
- a bottom surface;
- a front end surface connecting the top surface and the bottom surface;
- a rear end surface connecting the top surface and the bottom surface;
- a first side surface connecting the front end surface and the rear end surface, and the top surface and the bottom surface; and
- a second side surface connecting the front end surface and the rear end surface, and the top surface and the bottom surface, wherein

the cassette comprises a longitudinal axis A extending from the rear end surface to the front end surface and defines a longitudinal direction of the cassette, wherein
the cassette comprises an insert seat configured to support a cutting insert in the cassette, wherein the insert seat is formed in a transition between the top surface and the front end surface, wherein
a bisecting plane P, arranged in a longitudinal cross-section of the cassette, bisects the insert seat, wherein
the cassette further comprises a first cassette hole configured to receive a first fastening member for fastening the cassette in the tool seat, wherein the first cassette hole has a first opening arranged in the bottom surface, and wherein the first cassette hole comprises a central axis B, wherein
the bottom surface has mirror symmetry with respect to the bisecting plane P, wherein
the cassette further comprises a second cassette hole configured to receive a second fastening member for fastening the cassette in the tool seat, wherein the second cassette hole has a second opening arranged in the bottom surface, and wherein the second cassette hole comprises a central axis C, and wherein
the bottom surface comprises alternating parallel ridges and grooves extending in the direction of the longitudinal axis A, wherein the alternating parallel ridges and grooves are configured to mate with alternating parallel grooves and ridges arranged in the tool seat.

By having the bottom surface provided with alternating parallel ridges and grooves which are configured to mate with alternating parallel grooves and ridges in the tool seat in combination with two cassette holes having openings which are symmetrically arranged in the bottom surface of the cassette, a stable mounting of the cassette in the tool seat is achieved, which is able to withstand a high amount of side forces with a reduced risk of displacement of the cassette in the tool seat. Thereby, the risk of negative impact on the quality of the workpiece machined by the cutting tool is reduced.

According to an embodiment, the bottom surface comprises 5-20 parallel grooves extending in the direction of the longitudinal axis A.

By having 5-20 parallel grooves extending in the direction of the longitudinal axis A in the bottom surface, the mounting stability of the cassette in the tool seat is further improved due to the increased contact surface between the cassette and the tool seat. Fewer number of grooves requires an increased depth of the grooves in order to maintain the stability effect. Having fewer than five grooves would require the grooves to be so deep that the strength of the cassette might be negatively impact. Having more than 20 grooves results in that the ridges separating the grooves becomes so thin that they risk breaking during the cutting operation.

According to an embodiment, the parallel ridges and grooves are arranged parallel to the longitudinal axis A.

By having the parallel ridges and grooves arranged parallel to the longitudinal axis A, the cassette is able to withstand a high amount of side forces in both left and right directions during cutting operation.

According to an embodiment, the bisecting plane P divides the bottom surface in a first half and a second half, wherein a majority of the first opening is located in the first half, and wherein a majority of the second opening is located in the second half, as seen in a plane perpendicular to the bisecting plane P and parallel to the longitudinal axis A.

By having a majority of the first opening located in the first half, and a majority of the second opening located in the second half, the mounting stability of the cassette in the tool seat is further improved since the clamping forces generated by the fastening members are evenly distributed in the cassette.

According to an embodiment, the first opening is completely located in the first half, and the second opening is completely located in the second half.

By having the first opening completely located in the first half, and the second opening completely located in the second half, the mounting stability of the cassette in the tool seat is further improved since the clamping forces generated by the fastening members are more evenly distributed in the cassette.

According to an embodiment, the central axis B is parallel with the central axis C.

By having the central axis B being parallel with the central axis C, the mounting stability of the cassette in the tool seat is further improved since the clamping forces generated by the fastening members are evenly distributed in the cassette.

According to an embodiment, the central axis B and the central axis C are parallel with the bisecting plane P.

By having the central axis B and the central axis C being parallel with the bisecting plane P, the mounting stability of the cassette in the tool seat is further improved since the clamping forces generated by the fastening members are more evenly distributed in the cassette.

According to an embodiment, the central axis B and the central axis C are perpendicular to the longitudinal axis A.

By having the central axis B and the central axis C being perpendicular to the longitudinal axis A, the mounting stability of the cassette in the tool seat is further improved since a maximum clamping force in the cassette is generated by the fastening members.

According to an embodiment, the bisecting plane P intersects the front end surface at an intersection line E, wherein a first imaginary straight line extending from the intersection line E to the first central axis B, and a second imaginary straight line extending from the intersection line E to the second central axis C are arranged at an angle α relative each other, as seen in a plane perpendicular to the bisecting plane P and parallel to the longitudinal axis A, wherein α = 20°-30°.

By having α = 20°-30°, the mounting stability of the cassette in the tool seat is further improved since the clamping forces generated by the fastening members are evenly distributed in the cassette. A smaller angle than 20° reduces the mounting stability since the clamping forces generated by the fastening members only will be applied in the center part of the cassette. A higher angle than 30° reduces the strength of the cassette since the first and second cassette holes become arranged too close to the first and second side surfaces.

According to an embodiment, the first opening has a first diameter d₁, and wherein the second opening has a second diameter d₂, wherein d₁ = d₂.

By having the first diameter being equal to the second diameter, the mounting stability of the cassette in the tool seat is further improved since the clamping forces generated by the fastening members are evenly distributed in the cassette.

According to an embodiment, the first cassette hole and the second cassette hole are blind holes.

By having the first cassette hole and the second cassette hole arranged as blind holes, the fastening members are spaced apart from the insert seat and is therefore less affected by the heat generated during machining. The cassette dissipates the generated heat, and the fastening members are less likely to be deformed by the heat. The fastening members are thereby also less likely to get stuck in the cassette.

According to an embodiment, the bisecting plane P intersects the front end surface at an intersection line E, and wherein the bisecting plane P intersects the rear end surface at an intersection line D, wherein the distance between the intersection line E and the intersection line D is L in the direction of the longitudinal axis A, wherein the central axis B and the central axis C are arranged at a distance K from the intersection line E in the direction of the longitudinal axis A, wherein K/L = 0.75-0.90.

By having the central axis B and the central axis C arranged at a distance K from the intersection line E in the direction of the longitudinal axis A, wherein K/L = 0.75-0.90, the mounting stability of the cassette in the tool seat is further improved. Arranging the cassette holes closer to the front end surface increases the risk of rotational movement of the cassette in the tool seat during operation due to the reduced clamping force in the rear end of the cassette. Arranging the cassette holes closer to the rear end surface reduces the strength of the cassette since the cassette holes are coming too close to the rear end surface.

According to an embodiment, the bisecting plane P intersects the front end surface at an intersection line E, wherein the central axis B and the central axis C are arranged at a distance K from the intersection line E in the direction of the longitudinal axis A, wherein the distance from the central axis B to the central axis C is x, and wherein, at the distance K from the intersection line E in the direction of the longitudinal axis A, the distance from the first side surface to the second side surface, as seen in a plane perpendicular to the bisecting plane P and parallel to the longitudinal axis A, is y, wherein x/y = 0.5-0.7.

By having the distance from the central axis B to the central axis C to be x and the distance from the first side surface to the second side surface to be y wherein x/y = 0.5-0.7, the mounting stability of the cassette in the tool seat is further improved since the clamping forces generated by the fastening members are evenly distributed in the cassette. Having the cassette holes arranged closer to each other reduces the mounting stability since the clamping forces generated by the fastening members only will be applied in the center part of the cassette. Having the cassette holes arranged at a longer distance from each other reduces the strength of the cassette since the first and second cassette holes become arranged too close to the first and second side surfaces.

According to an embodiment, the insert seat comprises a bottom support surface, wherein the bottom support surface is the surface in the insert seat being closest to the bottom surface, wherein, as seen in a cross-section perpendicular to the longitudinal axis A, the outer contour of the alternating ridges and grooves forms a wave-shaped curve, wherein the wave-shaped curve has minimum points arranged at a distance T from the bottom support surface in a direction parallel to the bisecting plane P and perpendicular to the longitudinal axis A, and wherein the wave-shaped curve has an amplitude S, wherein S/T = 0.02-0.07.

By having a relation between the amplitude S and the distance T, wherein S/T = 0.02-0.07, the mounting stability of the cassette in the tool seat is further improved. Having shallower grooves increases the risk of displacement of the cassette in the tool seat during operation. Having deeper grooves has a negative impact on the strength of the cassette.

According to an embodiment, the rear end surface has a distance Wᵣ from the first side surface to the second side surface in a direction perpendicular to the longitudinal axis A, and wherein the front end surface has a distance W_{f} from the first side surface to the second side surface in a direction perpendicular to the longitudinal axis A, wherein W_{f}/Wᵣ= 0.35-0.55.

By having a shorter distance from the first side surface to the second side surface at the front end surface, the cassette can be used with a higher depth of cut during operation.

According to an embodiment, the cassette comprises a first internal coolant channel extending from a coolant inlet to a coolant outlet.

By having an internal coolant channel provided in the cassette, it is possible to deliver coolant fluid closer to the cutting insert mounted in the insert seat. The coolant effect during operation is thereby improved.

According to an embodiment, the coolant inlet is configured to be arranged in fluid communication with a coolant outlet arranged in the tool seat.

By having the coolant inlet arranged in fluid communication with a coolant outlet arranged in the tool seat, coolant fluid can be delivered through a coolant channel in the toolholder. The need for external coolant supply arrangements is thereby eliminated.

According to an embodiment, the coolant outlet is directed towards the insert seat.

By having the coolant outlet directed towards the insert seat, it is possible to deliver coolant fluid closer to the cutting insert mounted in the insert seat. The coolant effect during operation is thereby improved.

According to an embodiment, the coolant outlet is configured to be arranged in fluid communication with a second coolant channel arranged in a clamping element configured to secure a cutting insert in the insert seat.

By having the coolant outlet arranged in fluid communication with a second coolant channel arranged in a clamping element configured to secure a cutting insert in the insert seat, it is possible to deliver coolant fluid closer to the cutting insert mounted in the insert seat. The coolant effect during operation is thereby improved.

According to an embodiment, the cassette comprises a plurality of coolant outlets.

By having a plurality of coolant outlets in the cassette, coolant fluid can be more evenly distributed over the cutting insert mounted in the insert seat. The coolant effect during operation is thereby improved.

According to an embodiment, the cassette comprises a clamping hole extending from the top surface in direction towards the bottom surface, wherein the clamping hole is configured to receive a third fastening element for securing a clamping element in the cassette.

By having the clamping element secured in the cassette instead of in the toolholder body as disclosed in the prior art, a higher flexibility in the usage of the cutting tool is achieved.

The object of the present invention is further achieved by means of a cutting tool for chip removing machining, wherein the cutting tool comprises:
- a toolholder comprising a tool seat;
- a cassette as described above;
- a cutting insert;
- a first fastening member; and
- a second fastening member, wherein

the cutting insert is securely mounted in the insert seat, and wherein
the tool seat comprises a cassette support surface, wherein the cassette support surface comprises alternating parallel grooves and ridges, wherein the parallel ridges and grooves in the bottom surface mates with the parallel grooves and ridges in the cassette support surface, and wherein
the tool seat comprises a first seat hole and a second seat hole, wherein
the cassette is securely mounted in the tool seat by the first fastening member mating with the first cassette hole and the first seat hole, and by the second fastening member mating with the second cassette hole and the second seat hole.

The cutting tool is a cutting tool for performing a cutting operation. The cutting tool is especially beneficial in operations that exert side forces on the cassette due to the stable mounting of the cassette in the tool seat.

According to an embodiment, the cutting tool is a turning tool.

According to an embodiment, the cutting insert is a cubic boron nitride (CBN) cutting insert, a polycrystalline diamond (PCD) cutting insert, a cemented carbide cutting insert, a cermet cutting insert, or a ceramic cutting insert.

According to an embodiment, the cutting insert is an indexable cutting insert.

According to an embodiment, the cutting insert is a double sided cutting insert.

According to an embodiment, the first and second fastening members are fastening screws.

The cutting insert is securely mounted in the insert seat by any type of suitable clamping element known in the art, e.g. a screw or a clamp.

According to an embodiment, the cutting insert is secured in the insert pocket by a clamping element, which is secured in the cassette via a third fastening member. The third fastening member is preferably a fastening screw.

According to an embodiment, the first seat hole and the second seat hole are through holes.

By having the first and second seat holes arranged as through holes, the first and second fastening members can be engaged and disengaged from a side of the toolholder which is behind the cassette as seen in a direction of relative rotation with respect to the workpiece. This makes it easier to reach and handle the fastening members for fastening and releasing of the cassette.

According to an embodiment, the toolholder comprises an internal coolant channel having a coolant outlet in the tool seat. The coolant outlet in the tool seat is arranged in fluid communication with the coolant inlet in the cassette.

According to an embodiment, the coolant outlet in the cassette is arranged in fluid communication with a second coolant channel arranged in a clamping element configured to secure a cutting insert in the insert seat.

### BRIEF DESCRIPTION OF THE DRAWINGS

Figure 1 schematically illustrates a perspective view of a cassette according to an embodiment of the invention.
Figure 2 schematically illustrates a top view of the cassette illustrated in figure 1.
Figure 3 schematically illustrates a bottom view of the cassette illustrated in figure 1.
Figure 4 schematically illustrates a rear view of the cassette illustrated in figure 1.
Figure 5 schematically illustrated a left side view of the cassette illustrated in figure 1.
Figure 6 schematically illustrates a right side view of the cassette illustrated in figure 1.
Figure 7 schematically illustrates a front view of the cassette illustrated in figure 1.
Figure 8 schematically illustrates an enlargement of the dashed area marked in figure 7.
Figure 9 schematically illustrates a perspective view of a toolholder configured to carry the cassette illustrated in figures 1-7.
Figure 10 schematically illustrates a bottom view of the toolholder illustrated in figure 9.
Figure 11 schematically illustrates a perspective view of a cutting tool according to an embodiment of the invention.
Figure 12 schematically illustrates a bottom view of the cutting tool illustrated in figure 11.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art. Like reference numbers refer to like elements throughout. The elements illustrated in the drawings are not necessary according to scale. Some elements might have been enlarged in order to clearly illustrate those elements.

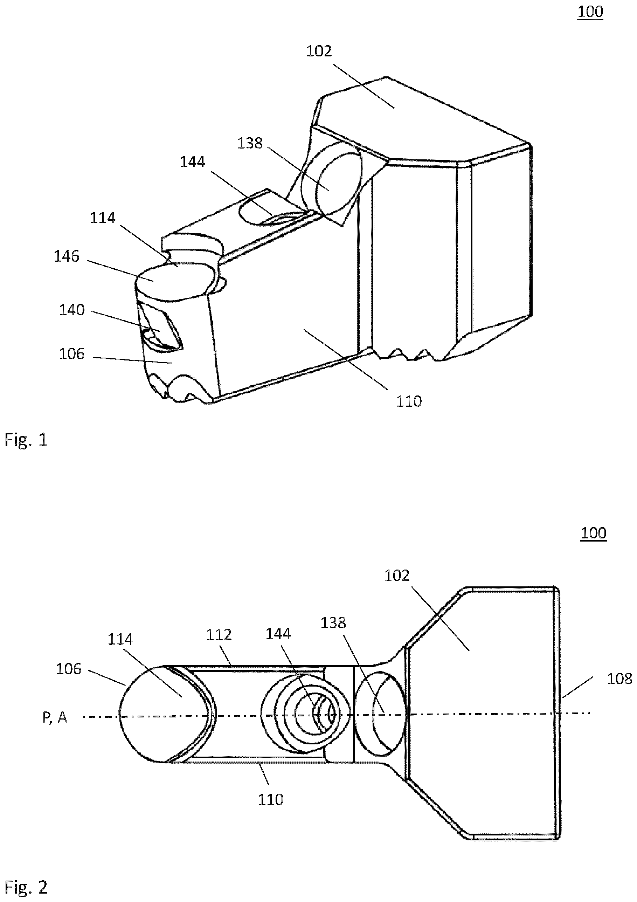

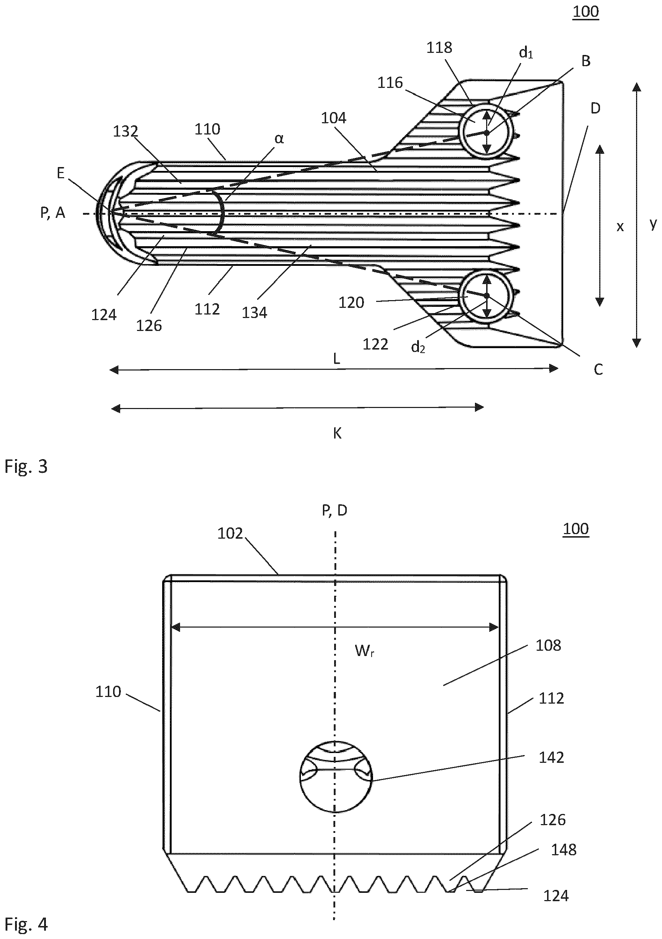

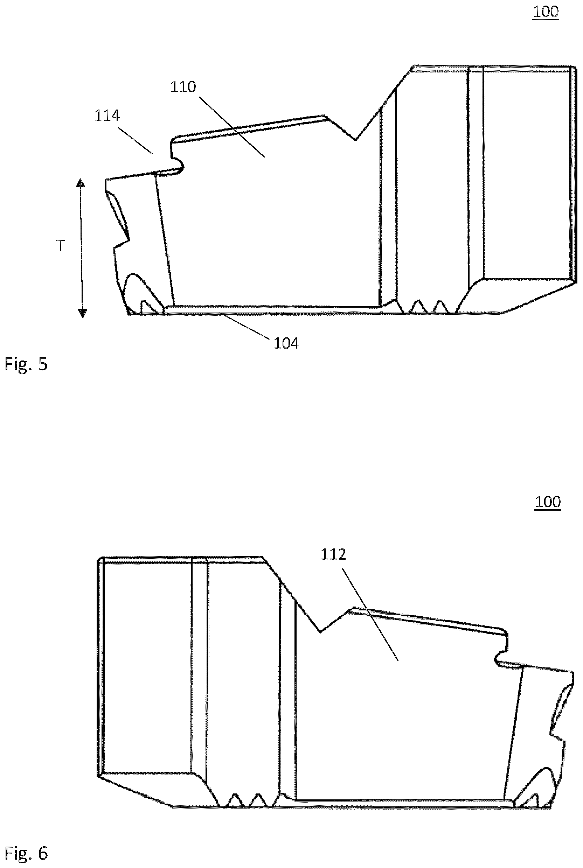

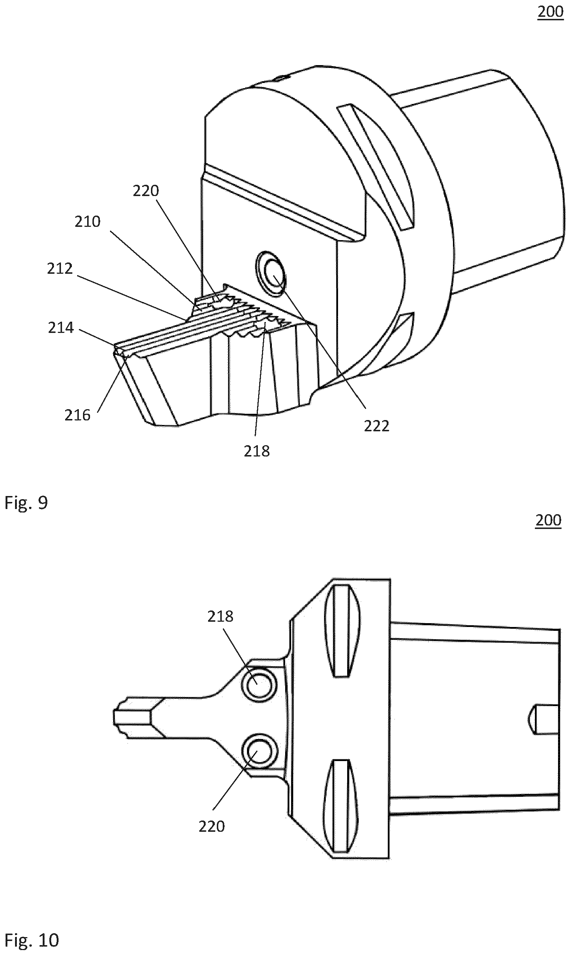

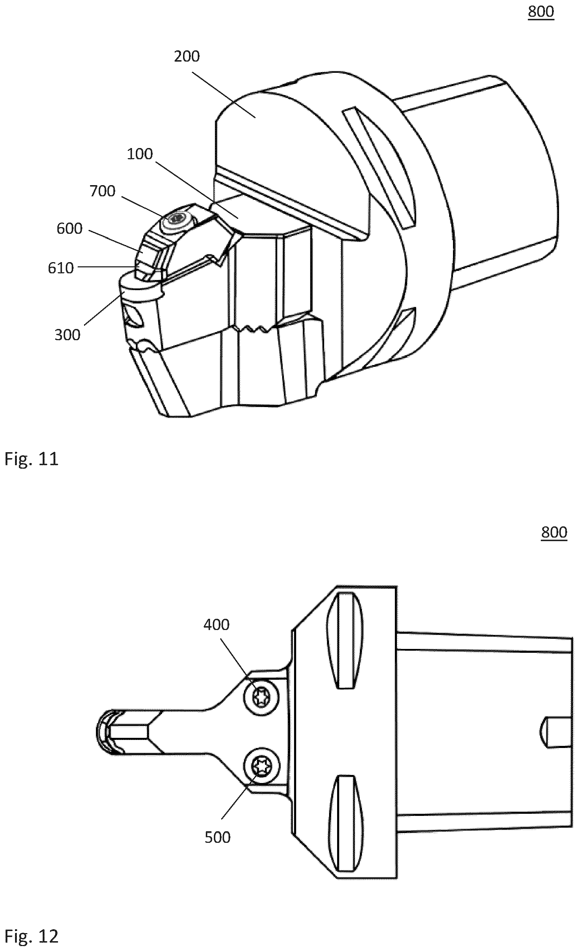

Figures 1-7 schematically illustrates a cassette (100) configured to be mounted in a tool seat (210) of a cutting tool (800) for chip removing machining according to an embodiment of the invention. The cassette (100) comprises a top surface (102), a bottom surface (104), a front end surface (106) connecting the top surface (102) and the bottom surface (104), a rear end surface (108) connecting the top surface (102) and the bottom surface (104), a first side surface (110) connecting the front end surface (106) and the rear end surface (108), and the top surface (102) and the bottom surface (104), and a second side surface (112) connecting the front end surface (106) and the rear end surface (108), and the top surface (102) and the bottom surface (104). The cassette (100) comprises a longitudinal axis A extending from the rear end surface (108) to the front end surface (106) and defines a longitudinal direction of the cassette (100). The cassette (100) further comprises an insert seat (114) configured to support a cutting insert (300) in the cassette (100), c.f. figure 11, wherein the insert seat (114) is formed in a transition between the top surface (102) and the front end surface (106). A bisecting plane P, arranged in a longitudinal cross-section of the cassette (100), bisects the insert seat (114). The cassette (100) further comprises a first cassette hole (116) configured to receive a first fastening member (400) for fastening the cassette (100) in the tool seat (210), and a second cassette hole (120) configured to receive a second fastening member (500) for fastening the cassette in the tool seat (210), c.f. figure 12. The first cassette hole (116) has a first opening (118) arranged in the bottom surface (104) and the second cassette hole (120) has a second opening (122) arranged in the bottom surface (104). The first cassette hole (116) comprises a central axis B and the second cassette hole (120) comprises a central axis C. The bottom surface (104) has mirror symmetry with respect to the bisecting plane P. The bottom surface (104) comprises alternating parallel ridges (126) and grooves (124) extending in the direction of the longitudinal axis A, wherein the alternating parallel ridges (126) and grooves (124) are configured to mate with corresponding grooves (216) and ridges (214) in the tool seat (210), c.f. figure 9. The grooves (124) and the ridges (126) are arranged parallel to the longitudinal axis A. The bisecting plane P divides the bottom surface (104) in a first half (132) and a second half (134), wherein the first opening (118) is located in the first half (132), and wherein the second opening (122) is located in the second half (134), as seen in a plane perpendicular to the bisecting plane P and parallel to the longitudinal axis A. The central axes B and C are parallel to each other and to the bisecting plane P. The central axes B and C are perpendicular to the longitudinal axis A. The bisecting plane P intersects the front end surface (106) at an intersection line E and the rear end surface (108) at an intersection line D. A first imaginary straight line extending from the intersection line E to the first central axis B, and a second imaginary straight line extending from the intersection line E to the second central axis C are arranged at an angle α relative each other, as seen in a plane perpendicular to the bisecting plane P and parallel to the longitudinal axis A. The first opening (118) has a first diameter d₁, and the second opening (122) has a second diameter d₂. The first cassette hole (116) and the second cassette hole (120) are blind holes. The distance between the intersection line E and the intersection line D is L in the direction of the longitudinal axis A, and the central axis B and the central axis C are arranged at a distance K from the intersection line E in the direction of the longitudinal axis A. The distance from the central axis B to the central axis C is x. At the distance K from the intersection line E in the direction of the longitudinal axis A, the distance from the first side surface (110) to the second side surface (112), as seen in a plane perpendicular to the bisecting plane P and parallel to the longitudinal axis A, is y. The insert seat (114) comprises a bottom support surface (146), wherein the bottom support surface (146) is the surface in the insert seat (114) being closest to the bottom surface (104). The outer contour of the alternating ridges (126) and grooves (124) forms a wave-shaped curve, wherein the wave-shaped curve has minimum points (148) arranged at a distance T from the bottom support surface (146) in a direction parallel to the bisecting plane P and perpendicular to the longitudinal axis A. The rear end surface (108) has a distance Wᵣ from the first side surface (110) to the second side surface (112) in a direction perpendicular to the longitudinal axis A, and the front end surface (106) has a distance W_{f} from the first side surface (110) to the second side surface (112) in a direction perpendicular to the longitudinal axis A. The cassette (100) comprises a first internal coolant channel extending from a coolant inlet (142) to a first coolant outlet (138) and a second coolant outlet (140). The coolant inlet (142) is configured to be arranged in fluid communication with a coolant outlet (222) arranged in the tool seat (210), c.f. figure 9. The second coolant outlet (140) is directed toward the insert seat (114). The first coolant outlet (138) is configured to be arranged in fluid communication with a second coolant channel arranged in a clamping element (600) configured to secure a cutting insert (300) in the insert seat (114), c.f. figure 11. The cassette (100) further comprises a clamping hole (144) extending from the top surface (102) in direction towards the bottom surface (104), wherein the clamping hole (144) is configured to receive a third fastening element (700) for securing a clamping element (600) in the cassette (100), c.f. figure 11.

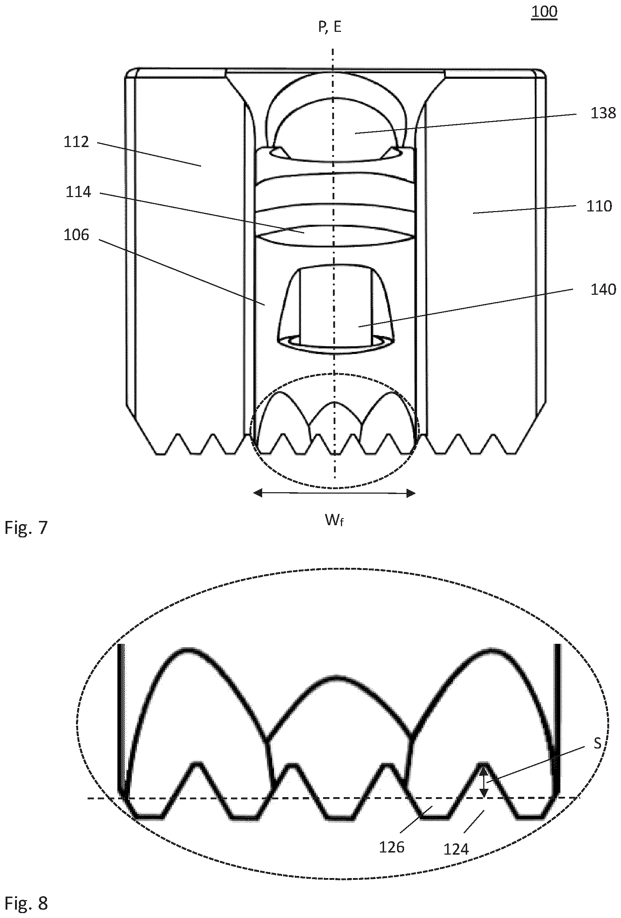

Figure 8 schematically illustrates an enlargement of the dashed area marked in figure 7. As seen in a cross-section perpendicular to the longitudinal axis A, the outer contour of the alternating ridges (126) and grooves (124) forms a wave-shaped curve, wherein the wave-shaped curve has an amplitude S.

Figures 9 and 10 schematically illustrates a toolholder (200) configured to carry the cassette (100). The toolholder (200) comprises a tool seat (210). The tool seat (210) comprises a cassette support surface (212), wherein the cassette support surface (212) comprises alternating parallel ridges (214) and grooves (216), which are configured to mate with the alternating grooves (124) and ridges (126) in the bottom surface (104). The tool seat (210) further comprises a first seat hole (218) and a second seat hole (220), wherein the first seat hole (218) and the second seat hole (220) are through holes. The toolholder (200) further comprises an internal coolant channel having a coolant outlet (222) arranged in the tool seat (210). The coolant outlet (222) is configured to be arranged in fluid communication with the coolant inlet (142) in the cassette (100).

Figures 11 and 12 schematically illustrates a cutting tool (800) in form of a turning tool according to an embodiment of the invention. The turning tool (800) comprises the toolholder (200), the cassette (100), a cutting insert (300), a first fastening element (400) in form of a fastening screw, a second fastening element (500) in form of a fastening screw, a clamping element in form of a clamp (600), and a third fastening element (700) in form of a fastening screw. The cassette (100) is secured in the tool seat (210) by the first fastening screw (400) and the second fastening screw (500), wherein the first fastening screw (400) mates with the first cassette hole (116) and the first seat hole (218), and wherein the second fastening screw (500) mates with the second cassette hole (120) and the second seat hole (220). The cutting insert (300) is securely mounted in the insert seat (114) by the clamp (600), which is securely mounted in the cassette (100) by the third fastening screw (700) mating with the clamping hole (144). The clamp (600) comprises an internal coolant channel having a coolant inlet arranged in fluid communication with the first coolant outlet (138), and a coolant outlet (610) directed toward the cutting insert (300).

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby.

## Claims

1. A cassette (100) configured to be mounted in a tool seat (210) of a cutting tool (800) for chip removing machining, wherein the cassette (100) comprises:
- a top surface (102);
- a bottom surface (104);
- a front end surface (106) connecting the top surface (102) and the bottom surface (104);
- a rear end surface (108) connecting the top surface (102) and the bottom surface (104);
- a first side surface (110) connecting the front end surface (106) and the rear end surface (108), and the top surface (102) and the bottom surface (104); and
- a second side surface (112) connecting the front end surface (106) and the rear end surface (108), and the top surface (102) and the bottom surface (104), wherein
the cassette (100) comprises a longitudinal axis A extending from the rear end surface (108) to the front end surface (106) and defines a longitudinal direction of the cassette (100), wherein
the cassette (100) comprises an insert seat (114) configured to support a cutting insert (300) in the cassette (100), wherein the insert seat (114) is formed in a transition between the top surface (102) and the front end surface (106), wherein
a bisecting plane P, arranged in a longitudinal cross-section of the cassette (100), bisects the insert seat (114), wherein
the cassette (100) further comprises a first cassette hole (116) configured to receive a first fastening member (400) for fastening the cassette (100) in the tool seat (210), wherein the first cassette hole (116) has a first opening (118) arranged in the bottom surface (104), and wherein the first cassette hole (116) comprises a central axis B, wherein
the bottom surface (104) has mirror symmetry with respect to the bisecting plane P, **characterized in that**
the cassette (100) further comprises a second cassette hole (120) configured to receive a second fastening member (500) for fastening the cassette in the tool seat (210), wherein the second cassette hole (120) has a second opening (122) arranged in the bottom surface (104), and wherein the second cassette hole (120) comprises a central axis C, and **in that**
the bottom surface (104) comprises alternating parallel ridges (126) and grooves (124) extending in the direction of the longitudinal axis A, wherein the alternating parallel ridges (126) and grooves (124) are configured to mate with alternating parallel grooves (216) and ridges (214) arranged in the tool seat (210).

2. The cassette (100) according to claim 1, wherein the bottom surface (104) comprises 5-20 parallel grooves (124) extending in the direction of the longitudinal axis A.

3. The cassette (100) according to any of the preceding claims, wherein the parallel ridges (126) and grooves (124) are arranged parallel to the longitudinal axis A.

4. The cassette (100) according to any of the preceding claims, wherein the bisecting plane P divides the bottom surface (104) in a first half (132) and a second half (134), wherein a majority of the first opening (118) is located in the first half (132), and wherein a majority of the second opening (122) is located in the second half (134), as seen in a plane perpendicular to the bisecting plane P and parallel to the longitudinal axis A.

5. The cassette (100) according to any of the preceding claims, wherein the central axis B is parallel with the central axis C.

6. The cassette (100) according to claim 5, wherein the central axis B and the central axis C are parallel with the bisecting plane P.

7. The cassette (100) according to claim 6, wherein the central axis B and the central axis C are perpendicular to the longitudinal axis A.

8. The cassette (100) according to claim 7, wherein the bisecting plane P intersects the front end surface (106) at an intersection line E, wherein a first imaginary straight line extending from the intersection line E to the first central axis B, and a second imaginary straight line extending from the intersection line E to the second central axis C are arranged at an angle α relative each other, as seen in a plane perpendicular to the bisecting plane P and parallel to the longitudinal axis A, wherein α = 20°-30°.

9. The cassette (100) according to any of the preceding claims, wherein the first opening (118) has a first diameter d₁, and wherein the second opening (122) has a second diameter d₂, wherein d₁ = d₂.

10. The cassette (100) according to any of the preceding claims, wherein the first cassette hole (116) and the second cassette hole (120) are blind holes.

11. The cassette (100) according to any of the preceding claims, wherein the bisecting plane P intersects the front end surface (106) at an intersection line E, and wherein the bisecting plane P intersects the rear end surface (108) at an intersection line D, wherein the distance between the intersection line E and the intersection line D is L in the direction of the longitudinal axis A, wherein the central axis B and the central axis C are arranged at a distance K from the intersection line E in the direction of the longitudinal axis A, wherein K/L = 0.75-0.90.

12. The cassette (100) according to any of the preceding claims, wherein the bisecting plane P intersects the front end surface (106) at an intersection line E, wherein the central axis B and the central axis C are arranged at a distance K from the intersection line E in the direction of the longitudinal axis A, wherein the distance from the central axis B to the central axis C is x, and wherein, at the distance K from the intersection line E in the direction of the longitudinal axis A, the distance from the first side surface (110) to the second side surface (112), as seen in a plane perpendicular to the bisecting plane P and parallel to the longitudinal axis A, is y, wherein x/y = 0.5-0.7.

13. The cassette (100) according to any of the preceding claims, wherein the insert seat (114) comprises a bottom support surface (146), wherein the bottom support surface (146) is the surface in the insert seat (114) being closest to the bottom surface (104), wherein, as seen in a cross-section perpendicular to the longitudinal axis A, the outer contour of the alternating ridges (126) and grooves (124) forms a wave-shaped curve, wherein the wave-shaped curve has minimum points (148) arranged at a distance T from the bottom support surface (146) in a direction parallel to the bisecting plane P and perpendicular to the longitudinal axis A, and wherein the wave-shaped curve has an amplitude S, wherein S/T = 0.02-0.07.

14. A cutting tool (800) for chip removing machining, wherein the cutting tool (800) comprises:
- a toolholder (200) comprising a tool seat (210);
- a cassette (100) according to any of claims 1-13;
- a cutting insert (300);
- a first fastening member (400); and
- a second fastening member (500), wherein
the cutting insert (300) is securely mounted in the insert seat (114), and wherein
the tool seat (210) comprises a cassette support surface (212), wherein the cassette support surface (212) comprises alternating parallel grooves (216) and ridges (214), wherein the parallel ridges (126) and grooves (124) in the bottom surface (104) mates with the parallel grooves (216) and ridges (214) in the cassette support surface (212), and wherein
the tool seat (210) comprises a first seat hole (218) and a second seat hole (220), wherein
the cassette (100) is securely mounted in the tool seat (210) by the first fastening member (400) mating with the first cassette hole (116) and the first seat hole (218), and by the second fastening member (500) mating with the second cassette hole (120) and the second seat hole (220).

15. The cutting tool (800) according to claim 14, wherein the first seat hole (218) and the second seat hole (220) are through holes.
